# EUROPEAN PATENT APPLICATION

(11) **EP 4 205 933 A1**
(43) Date of publication of application: **05.07.2023**
(21) Application number: 22214612.8
(22) Date of filing: 19.12.2022
(51) Int. Cl.: B29B 9/16, B01D 53/30, F26B 17/00, B29B 13/06

(54) **TREATMENT APPARATUS AND METHOD FOR INCOHERENT PLASTIC MATERIAL**

(30) Priority: 30.12.2021 IT 202100033110
(71) Applicant: Piovan S.P.A., 30036 Santa Maria di Sala (VE) (IT)
(72) Inventor: BELLIO, Enrico, 31050 Ponzano V.to (TV) (IT); CAPPELLINI, Davide, 26029 Soncino (CR) (IT)
(74) Representative: Luppi Intellectual Property S.r.l.

(57) **Abstract**

Treatment apparatus (1) and method for processing incoherent plastics, said treatment apparatus comprising a container (2) for containing the plastics, said container comprising at least one gas inlet (3) and at least one gas outlet (4), flow generating means for generating a process gas flow from said gas inlet (3) to said gas outlet (4), sensor means for detecting at least one value indicating the content of an aldehyde in a gas, said sensor means being arranged to detect said value indicating the content of an aldehyde in the process gas exiting said container (2), wherein said sensor means comprises olfactory sensor means (9) for detecting at least one value indicating the content of an aldehyde in a gas and arranged to detect said value indicating the content of an aldehyde in the process gas exiting said container (2), and said treatment apparatus (1) comprises control means configured to control at least one process operating parameter on the basis of signals supplied by said olfactory sensor means (9).

## Description

### Background of the invention

The invention relates to a treatment apparatus and method for processing incoherent plastics, i.e. plastics in the form of granules and/or pellets and/or microgranules and/or powder and/or scales and/or flakes or the like.

Specifically, but not exclusively, the invention can be advantageously applied in a plant for treating incoherent plastics, like, for example, a dehumidification and/or drying and/or crystallization and/or vacuum conveying and/or pressurized conveying plant for incoherent plastics.

Such a plant can be designed, in particular, to feed a user machine, like for example, a machine for processing and transforming plastics, in particular an extruder that supplies extruded plastics to an injection-moulding and/or blow-moulding and/or compression moulding apparatus.

In the plastics transforming industry, limiting, cancelling or correcting the acetaldehyde content of the end product may be required. This occurs, for example, in the food packaging industry, or in the production of preforms used for producing bottles for beverages.

Further, the market increasingly requires plastics to be recovered. In particular in the food packaging industry, making end products with polymer granules is known - for example PET (polyethylene terephthalate) polymer granules - that are obtained by recycling and are mixed in variable percentages with virgin resin. The recycling material is in general selected and processed by plasticisation and pelletization. Nevertheless, using recycled granules does not ensure constancy of the features of the material exiting an extruding and/or degradation line.

The acetaldehyde present in the PET melting process remains imprisoned in the die of the cooled granule, which causes, in the end product, i.e. in the package (for example, in the plastics container), a release of acetaldehyde, with consequent organoleptic alteration of the packaged substance.

Patent publication WO 2021/176370 A1 discloses a treatment apparatus as in the preamble to claim 1.

One drawback of the prior art is that the production systems for producing RPET granule (PET obtained from recycling) do not permit effective reduction of the acetaldehyde content from the plastics of the end product.

### Summary of the invention

One object of the invention is to produce an apparatus and/or a method that is able to overcome one or more of the aforesaid limits and drawbacks of the prior art.

One object is to provide an apparatus and/or a method for processing incoherent plastics that are alternative to the prior art.

One advantage is to provide an apparatus and/or a method that is able to reduce the acetaldehyde content in incoherent plastics, in particular when the material contains a percentage of material coming from recycling.

One advantage is to make available an apparatus and/or a method that enables incoherent plastics to be processed with precision and repeatability in order to reduce and/or eliminate the acetaldehyde from the material.

One advantage is to make an apparatus and/or a method that is able to process, with great efficiency, incoherent plastics to eliminate or significantly reduce the acetaldehyde content from the material.

One advantage is to reduce or remove acetaldehyde from plastics (in particular from RPET) in incoherent format, i.e. in granules and/or microgranules and/or powder and/or scales and/or flakes, or the like.

One advantage is to eliminate or reduce the substances that cause the formation of acetaldehyde from the incoherent plastics (in particular RPET).

One advantage is to permit a measurement of the quantity of residual acetaldehyde in the processed material and/or of the quantity of acetaldehyde extracted from the processed material, where the quantity of residual or extracted acetaldehyde can be expressed, in particular, in ppm and/or mg/kg, in relation to the quantity of processed material.

One advantage is to control in a secure and reliable manner a process of reducing the acetaldehyde in polymeric granules from recycled material (RPET).

One advantage is to permit the incoherent plastics to be processed, in particular in order to reduce and/or eliminate acetaldehyde from the material, with relatively high energy efficiency.

Such objects and advantages, and still others, are achieved by a method and/or an apparatus according to one or more of the claims set out below.

In one embodiment, a treatment apparatus, in particular for reducing or extracting or eliminating an aldehyde (in particular acetaldehyde), comprises a container for containing incoherent plastics, flow generating means for generating a flow of process gas from a gas inlet to a gas outlet of the container, olfactory sensor means characterized for detecting the aldehyde content in a gas and arranged to detect the aldehyde content in the process gas exiting the container, control means configured to control at least one operating parameter of the process on the basis of signals supplied by the olfactory sensor means. The control means may be configured to control through feedback the aforesaid operating parameter of the process on the basis of signals supplied by the olfactory sensor means.

The aforesaid operating parameter of the process may comprise, in particular, one or more of the following parameters: a parameter indicating the humidity of the process gas entering the container, a parameter indicating the flowrate of the process gas entering and/or exiting the container, a parameter indicating the temperature of the incoherent plastics and/or a parameter indicating the humidity content of the incoherent plastics (inside, at the inlet or outlet of the container), a parameter indicating an operating intensity of means for stirring the material inside the container, a parameter indicating the temperature of the process gas entering the container, a parameter indicating an operating intensity of means for recirculating the material from an outlet to an inlet of the container.

### Brief description of the drawings

The invention can be better understood and implemented with reference to the attached drawings that illustrate some embodiments thereof by way of non-limiting example, in which:
Figure 1 shows a vertical raised diagram of a first embodiment of a treatment apparatus for processing incoherent plastics, made according to the present invention, in particular to extract and/or reduce and/or remove the acetaldehyde content from the material;
Figure 2 shows a vertical raised diagram of a second embodiment of a treatment apparatus for processing incoherent plastics, made according to the present invention, in particular to extract and/or reduce and/or remove the acetaldehyde content from the material;
Figure 3 shows a block diagram of an embodiment of an algorithm usable in a treatment method made according to the present invention, that is in particular implementable on the control means of any one of the treatment apparatuses of Figures 1 and 2.

### Detailed description

With reference to the attached figures, for the sake of simplicity of exposure, different identical embodiments have been indicated by the same number.

With reference to the aforesaid figures, with 1 a treatment apparatus for processing incoherent plastics has been indicated overall, in particular for processing polymer granules, like, for example, granules comprising at least one percent RPET (PET obtained from recycling).

The treatment apparatus 1 may comprise, in particular, at least one container 2 (for example a hopper) suitable for containing the incoherent material. The container 2 may comprise, in particular, at least one gas inlet 3 for the entry of a process gas and at least one gas outlet 4 for the exit of the process gas. The container 2 may comprise, in particular, at least one inlet IN for the entry of the material to be processed and at least one outlet OUT for the exit of the processed material.

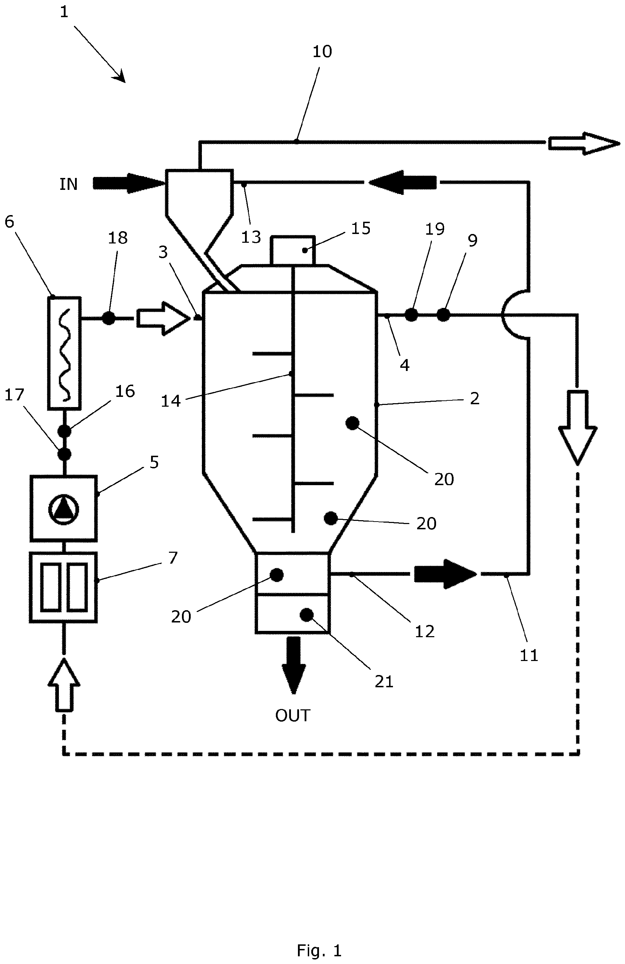

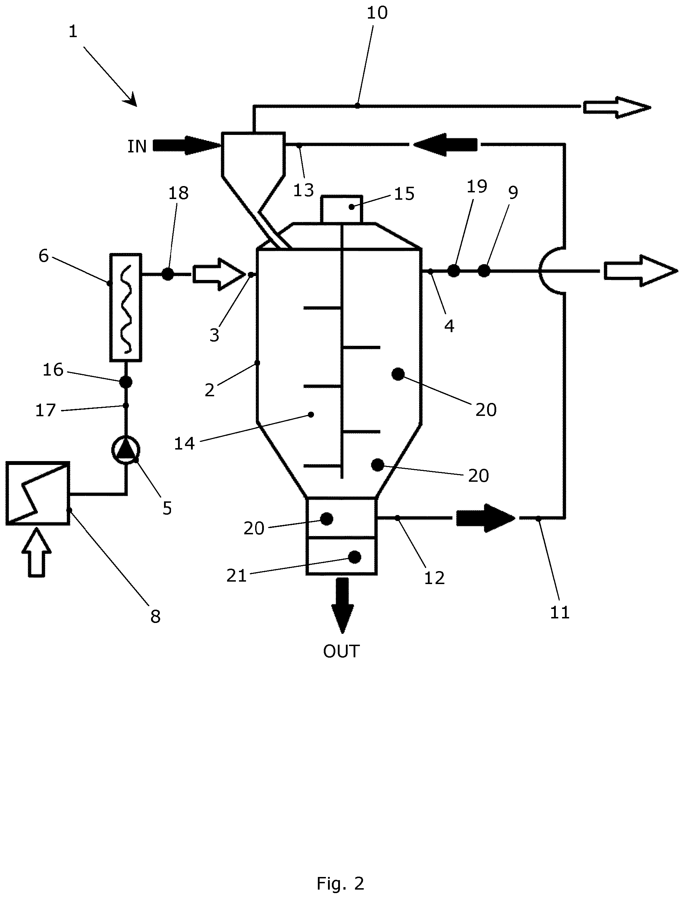

The treatment apparatus 1 may comprise, in particular, flow generating means for generating a flow of process gas from the gas inlet 3 to the gas outlet 4. The flow generating means may comprise, in particular, at least one actuator 5 (for example a pump or a fan) configured to move a flow of gas in a conduit. The flow generating means may be, in particular, configured to generate a flow in a closed circuit (in which the process gas exiting the container is treated and introduced again into the container), as in the embodiment in Figure 1 (which is suitable, in particular, for treating crystalline plastics). The flow generating means may be, in particular, configured to generate a flow in an open circuit (in which the process gas entering the container is removed from the environment and the process gas exiting the container is released into the environment), as in the embodiment in Figure 2 (which is suitable, in particular, for treating amorphous plastics and also for treating crystalline plastics). It is however possible to configure the apparatus in Figure 1, with appropriate modifications, so as to generate a flow in an open circuit, thus like configuring the apparatus in Figure 2 so as to generate a flow in a closed circuit.

The flow generating means may comprise, in particular, at least one heater 6 of the process gas entering the container.

The flow generating means may comprise, in particular, at least one dehumidifier of the process gas entering the container. The dehumidifier may comprise, in particular, a dehumidifier of the type with drying materials, in particular of the type with molecular sieves, like, for example, a twin-tower dehumidifier of molecular sieves 7 (see embodiment in Figure 1). It is possible, in particular, to use a dehumidifier with specific molecular sieves to absorb and eliminate the aldehyde (acetaldehyde). The dehumidifier may comprise, in particular, a dry air generator 8 (for example a dry air generator comprising at least one gas compressor and/or a dry air generator of the type with absorption technology and/or a dry air generator of the mechanical-refrigerating type).

The treatment apparatus 1 may comprise, in particular, olfactory sensor means 9 (for example an electronic nose) characterized for detecting at least one indicative value of the aldehyde content in a gas. In particular, the olfactory sensor means 9 may be arranged to detect an indicative value of the aldehyde content of the process gas exiting the container 2. The aforesaid aldehyde may be, in particular, acetaldehyde, so that the olfactory sensor means 9 may be characterized for detecting at least one indicative value of the acetaldehyde content of the process gas. The olfactory sensor means may be accordingly designed and configured and especially suitable for detecting a specific substance, i.e. the acetaldehyde. The characterization of the olfactory sensor means specifically for detecting acetaldehyde in a gas is, *per se,* known and is not disclosed in greater detail.

The treatment apparatus 1 may comprise, in particular, suction means 10 configured to suck gas, in particular by vacuum generating means from a top of the container 2.

The treatment apparatus 1 may comprise, in particular, (electronic and programmable) control means configured to control the treatment apparatus 1 on the basis of signals supplied by the olfactory sensor means 9. The control means may be, in particular, configured to control at least one parameter indicating the humidity content of the process gas that enters the container 2 on the basis of signals supplied by the olfactory sensor means 9. The control means may be, in particular, configured to diminish the humidity content of the process gas that enters the container 2 if the olfactory sensor means 9 detects an increase in the aldehyde (acetaldehyde) content of the process gas exiting the container 2.

The aforesaid parameter indicating the humidity content of the process gas may comprise, in particular, the dewpoint and/or the relative humidity and/or specific humidity and/or the absolute humidity of the process gas.

The control means may be, in particular, configured to control at least one temperature of the process gas on the basis of signals supplied by the olfactory sensor means 9. In particular, the control means may be configured to control at least one temperature of the process gas entering the container 2 on the basis of signals supplied by the olfactory sensor means 9. The control means may be, in particular, configured to increase the temperature of the process gas that enters the container 2 if the olfactory sensor means 9 detects an increase in the aldehyde (acetaldehyde) content of the process gas exiting the container 2.

The control means may be, in particular, configured to control at least one flowrate of the process gas entering the container 2 on the basis of signals supplied by the olfactory sensor means 9. The control means may be, in particular, configured to control at least one flowrate of the process gas exiting the container 2 on the basis of signals supplied by the olfactory sensor means 9. The control means may be, in particular, configured to increase the flowrate of the process gas that enters the container 2 if the olfactory sensor means 9 detects an increase in the aldehyde (acetaldehyde) content of the process gas exiting the container 2.

The control means may be, in particular, configured to receive data on the incoherent plastics to be processed and to control the flow generating means (in particular, the heater 6) on the basis of the aforesaid data received on the material and on the basis of signals supplied by the olfactory sensor means 9.

The control means may be, in particular, configured to control at least one parameter indicating the humidity content of the incoherent plastics on the basis of signals supplied by the olfactory sensor means 9. The control means may be, in particular, configured to diminish the humidity content of the plastics exiting the container 2 if the olfactory sensor means 9 detects an increase in the aldehyde (acetaldehyde) content of the process gas exiting the container 2.

The treatment apparatus 1 may comprise, in particular, recirculation means 11 configured to recirculate at least one part of the incoherent plastics from an outlet 12 to an inlet 13 of the container. The recirculation means 11 may comprise, in particular, at least one conveyor of incoherent plastics.

The control means may be, in particular, configured to control the recirculation means 11 on the basis of signals supplied by the olfactory sensor means 9. The control means may be, in particular, configured to increase an operating speed of the recirculation means 11 if the olfactory sensor means 9 detects an increase in the aldehyde (acetaldehyde) content of the process gas exiting the container 2.

The treatment apparatus 1 may comprise, in particular, stirring means 14 configured to stir the incoherent plastics in the container 2. The stirring means 14 may comprise, in particular, a rotating shaft (with vertical axis) provided with blades and driven by a motor 15. The control means may be, in particular, configured to control the stirring means 14 on the basis of signals supplied by the olfactory sensor means 9. The control means may be, in particular, configured to increase an operating speed of the stirring means 14 if the olfactory sensor means 9 detects an increase in the aldehyde (acetaldehyde) content of the process gas exiting the container 2.

The treatment apparatus 1 may comprise, in particular, at least one humidity sensor 16 arranged to detect a value (for example the dewpoint) indicating the humidity in the process gas. The treatment apparatus 1 may comprise, in particular, at least one flowrate sensor 17 arranged to detect the flowrate of the process gas. The treatment apparatus 1 may comprise, in particular, at least one temperature sensor 18 arranged to detect the temperature of the process gas at the inlet 3 of the container 2. The treatment apparatus 1 may comprise, in particular, at least one temperature sensor 19 arranged to detect the temperature of the process gas at the outlet 4 of the container 2. The treatment apparatus 1 may comprise, in particular, at least one or more temperature sensors 20 arranged to detect the temperature of the incoherent plastics in one or more zones of the container 2, for example near the outlet OUT and/or in one or more intermediate zones of the container 2. The treatment apparatus 1 may comprise, in particular, at least one humidity sensor 21 arranged to detect a parameter indicating the humidity content of the incoherent material in the container 2, for example near the outlet OUT of the container 2.

The treatment apparatus 1 in particular enables a treatment method to be actuated that may comprise the step of generating a flow of process gas through the incoherent plastics. The treatment method may comprise, in particular, the step of detecting by the olfactory sensor means 9 the aldehyde (acetaldehyde) content of the process gas that has traversed the incoherent plastics. The treatment method may comprise, in particular, the step of controlling at least one operating parameter of the method on the basis of the aforesaid detected content.

The aforesaid operating parameter may comprise, in particular, at least one parameter selected from the group comprising: a parameter indicating the humidity content of the process gas, a parameter indicating a temperature of the process gas, a parameter indicating a flowrate of the process gas, a parameter indicating the humidity content of the incoherent plastics, a parameter indicating a stirring speed of the incoherent plastics, a parameter indicating a recirculation speed of the incoherent plastics.

It is possible to provide at least two different methods for extracting the acetaldehyde from the incoherent plastics. A first method may be particularly advantageous for processing plastics (for example RPET) with an amorphous structure. A second method may be particularly advantageous for processing plastics (for example RPET) with a crystalline structure.

Both methods may be implemented with a continuous process or with a batch process. In both methods it is possible to provide the action of stirring the material during treatment. In both methods, it is possible to use a process gas (for example, air) which may be heated to a desired temperature according to the features of the material.

It has been found that the presence of humidity in the plastics granule leads to the production of acetaldehyde, in particular owing to the phenomenon of hydrolysis, i.e. the breakage of the molecular chain of the polyethylene terephthalate. It has been thought in particular, to determine in real time the value of the dewpoint of the process gas in order to dehumidify correctly the plastics granule to be processed. It has also been found in plastics (in particular in PET) in crystalline state that water absorption is slower than in amorphous state, which entails a different diffusion dynamic also during removal of the aldehyde (acetaldehyde).

In the process in question, an excess of dehumidification can be avoided as this could cause an undesired increase in the intrinsic viscosity of the plastics granule, with consequent production of acetaldehyde during the successive steps of treating the plastics granule.

It has been found that acetaldehyde can form during melting of the material (in particular, of the PET) and may remain imprisoned in the die of the product (for example, of the preform) when the product has cooled. It has been observed that with the increase of the transformation process temperature of the plastics granule and/or with the increase of the dwell time of the plastics granule at relatively high temperatures, the acetaldehyde content of the end product can increase accordingly.

It has further been found that if the acetaldehyde content of the plastics granule is kept relatively low, this significantly helps the acetaldehyde content to be kept low also in the subsequent transformations of the plastics granule.

As said, the apparatus and the method disclosed here may be used both for material to be recycled (for example, RPET) with an amorphous structure, and with a crystalline structure. This enables the apparatus and the method disclosed here to be used both directly exiting a process extruding and/or producing the RPET plastics granule and exiting a degradation and/or solid-state polymerization process (SSP) after condensation of the plastics granule RPET.

In one embodiment, a treatment method for treating the incoherent plastics, in particular for reducing and/or eliminating the acetaldehyde from the material, may comprise the step of generating a flow of a process gas through the incoherent plastics to extract the acetaldehyde. The treatment method may comprise, in particular, the step of detecting (by the olfactory sensor means 9) possible odour emissions of acetaldehyde in the process gas that has traversed the incoherent plastics. The treatment method may comprise, in particular, the step of controlling at least one process operating parameter on the basis of the odour emissions detected. The aforesaid process operating parameter may be controlled through feedback on the basis of the odour emissions detected.

This process operating parameter may comprise, in particular, a parameter indicating the humidity content of the process gas and/or a parameter indicating the temperature of the process gas and/or a parameter indicating the flowrate of the process gas and/or other parameters as disclosed above. This process operating parameter could, however, comprise another process operating parameter, in particular a parameter indicating a chemical-physical feature of the process gas and/or a parameter indicating a feature of the incoherent material and/or a parameter indicating an operating feature of an actuator.

The treatment method may, in particular, control one or more different process parameters, for example depending on the extraction and/or reduction features for extracting and/or reducing aldehyde from the plastics. In particular, in the case of amorphous material, a thermal flow may be generated that is such as to avoid softening of the material and resulting adhesion, in particular taking account of the specific vitreous transition temperature Tg that will have to traverse the processed material. It is possible to control in an appropriate manner the speed of the rotation axis of the material stirring means 14 and/or the flowrate of the process gas, so as to avoid (even local) softening of the material being processed.

The olfactory sensor means 9 that detects the acetaldehyde content of the process gas, and that may be arranged, in particular, at the outlet of the container 2 (or crystallizer), enables possible modifications in the activity of extracting acetaldehyde to be detected and enables the (electronic) control means to establish an appropriate variation of the setpoint values of the control.

In the case of crystalline material (where the material does not have to traverse a vitreous transition temperature) it is possible to control the process so as to avoid degradation of the material (thus avoid an increase in the viscosity of the granule) in order to avoid or limit the production of acetaldehyde.

The method may comprise, in particular, the step of controlling at least one parameter indicating the humidity of the processed material (in particular the final degree of humidity of the granule) and to compare this parameter indicating the humidity of the material with the value of acetaldehyde present in the process gas and detected by the olfactory sensor means 9 arranged at the outlet of the container 2 (crystallizer).

The method may comprise, in particular, the step of recirculating the material by removing the material (plastics granule) from a (lower) outlet 12 of the container (crystallizer) and taking the material to an (upper) inlet 13 of the container, and the step of controlling the recirculation means 11 to recirculate the material on the basis of the acetaldehyde value in the process gas measured by the olfactory sensor means 9, so as to avoid, on the one hand, recirculating inappropriately processed material (for example material at an inappropriate temperature), and, on the other hand, recirculating material that has remained exposed too long to the heat process with a flow of process gas that is too dry (for example a gas with a dewpoint that is too negative).

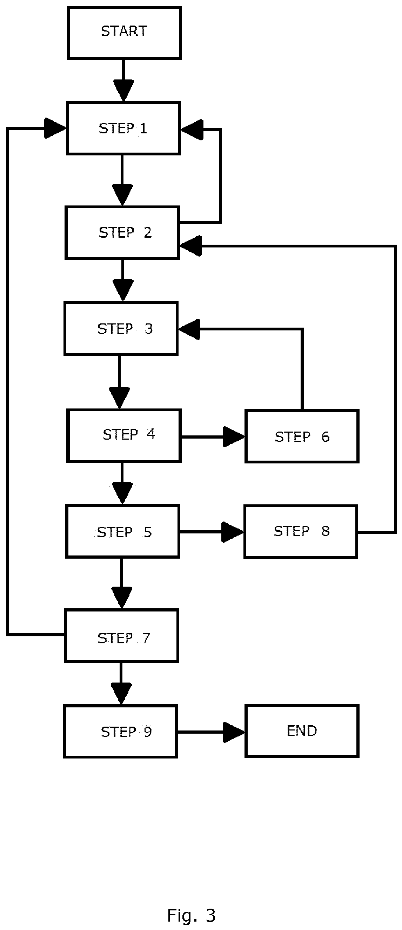

The method may comprise, in particular, the steps of controlling one or more process parameters (relating to the process of eliminating and/or reducing the acetaldehyde) according to the following embodiment, with reference to the block diagram of Figure 3.

### Treatment embodiment

This purely illustrative embodiment of the invention can be particularly suitable for processing incoherent plastics in amorphous state. Initially, at least the following setpoint values for controlling the apparatus are set: a dewpoint value DP of the process gas at the inlet of the container, a temperature value TG of the process gas at the inlet of the container, a flowrate value Q of the process gas at the inlet of the container, an acetaldehyde odour (intensity and/or content) value AA of the process gas detectable by the olfactory sensor means at the outlet of the container, two values Linf and Lsup that constitute the lower limit and the upper limit of an acceptable range of the desirable value of acetaldehyde intensity and/or content within the value AA (Linf < AA < Lsup), a value tlim of a set time deemed to be appropriate for performing the acetaldehyde reduction treatment, a minimum dewpoint threshold value DPlim of the dewpoint of the process gas, a minimum temperature threshold value Tlim that is suitable for recirculating the processed material (where Tlim depends at least on the type of material, in particular Tlim can be greater than the vitreous transition temperature Tg of the material). This embodiment is illustrated schematically by the block diagram of Figure 3. When the incoherent plastics have been introduced into the container (for example according to a methodology of batch type), step 1 is embarked upon.

Step 1: recirculation of the plastics introduced into the container is maintained inactive or deactivated; the incoherent plastics introduced into the container are processed by the process gas characterized by the aforesaid setpoint values DP, TG and Q; after a set interval of time Δt step 2 is embarked upon.

Step 2: the temperature TM of the material is measured; if TM ≤ Tlim, step 1 is then returned to; if TM > Tlim, the step 3 is embarked upon.

Step 3: material recirculating is activated or continued, and the current acetaldehyde value of the process gas is measured (by the olfactory sensor means 9) at the outlet of the container and this measured current acetaldehyde value is stored; after a set time Δt, step 4 is embarked upon.

Step 4: the current acetaldehyde value of the process gas at the outlet of the container is again measured and stored; if the current acetaldehyde value is decreased compared with the last previously measured value, step 5 is proceeded to; if the current acetaldehyde value is the same as or increased with respect to the last previously measured value, step 6 is embarked upon.

Step 5: the dewpoint DP setpoint value is increased by a set value ΔDP, i.e. DP = DP + ΔDP, in this way reducing the dehumidifying power of the process gas (for example, shifting from -30°C to -25°C); if the measured current acetaldehyde value is less than or the same as Linf (i.e. the desired level of reduction of the acetaldehyde is reached), step 7 is embarked upon; if the measured current acetaldehyde value is greater than Linf (i.e. the desired level of reduction of the acetaldehyde is not reached), the step 8 is embarked upon.

Step 6: the setpoint value of the flowrate Q of the process gas is increased by a set value ΔQ, i.e. Q = Q + ΔQ; after which, only if Q + ΔQ > Qlim, is Q = Qlim set; after which step 3 is returned to.

Step 7: if t ≥ tlim, i.e. if the time t elapsing from the start of the acetaldehyde reduction treatment is greater than or the same as the maximum time limit tlim, then step 9 is embarked upon; if t < tlim, then step 1 is returned to.

Step 8: the dewpoint DP setpoint value is decreased by a set value ΔDP, i.e. DP = DP - ΔDP (for example, there is a shift from -30°C to -35°C), increasing in this manner the dehumidifying power of the process gas; after which, only if the new value increased by a setpoint of the dewpoint DP is less than DPlim, i.e. DP < DPlim, then DP = DPlim; after which, step 2 is returned to.

Step 9: the acetaldehyde reduction cycle has finished when recirculation of the material is interrupted that can be discharged by the container.

## Claims

1. Treatment apparatus (1) for processing incoherent plastics, said treatment apparatus comprising:
- a container (2) for containing the plastics, said container comprising at least one gas inlet (3) and at least one gas outlet (4);
- flow generating means for generating a process gas flow from said gas inlet (3) to said gas outlet (4);
- sensor means for detecting at least one value indicating the content of an aldehyde in a gas, said sensor means being arranged to detect said value indicating the content of an aldehyde in the process gas exiting said container (2);
**characterized in that**:
- said sensor means comprises olfactory sensor means (9) **characterized by** detecting at least one value indicating the content of an aldehyde in a gas and arranged to detect said value indicating the content of an aldehyde in the process gas exiting said container (2);
- said treatment apparatus (1) comprises control means configured to control at least one process operating parameter on the basis of signals supplied by said olfactory sensor means (9).

2. Apparatus according to claim 1, wherein said at least one operating parameter comprises at least one parameter selected from the group including: a parameter indicating the humidity content of the process gas, a process gas temperature, a process gas flowrate, a parameter indicating the humidity content of the incoherent plastics, a parameter indicating a stirring speed of the incoherent plastics, a parameter indicating a recirculation speed of the incoherent plastics.

3. Apparatus according to claim 1 or 2, wherein said aldehyde is acetaldehyde, whereby said olfactory sensor means (9) is **characterized by** detecting at least one value indicating the acetaldehyde content of the process gas.

4. Apparatus according to any one of the preceding claims, wherein said control means is configured to control at least one parameter that is indicating the humidity content of the process gas entering said container (2) on the basis of signals provided by said olfactory sensor means (9).

5. Apparatus according to claim 4, wherein said control means is configured to decrease the humidity content of the process gas entering said container (2) if said olfactory sensor means (9) detects an increase in the aldehyde content of the process gas exiting said container (2).

6. Apparatus according to claim 4 or 5, wherein said at least one parameter indicating the humidity content of the process gas comprises the dewpoint and/or the relative humidity and/or the specific humidity and/or the absolute humidity.

7. Apparatus according to any one of the preceding claims, wherein said control means is configured to control at least one temperature of the process gas on the basis of signals provided by said olfactory sensor means (9).

8. Apparatus according to claim 7, wherein said control means is configured to control at least one temperature of the process gas entering said container on the basis of signals provided by said olfactory sensor means.

9. Apparatus according to any one of the preceding claims, wherein said control means is configured to control at least one flowrate of the process gas entering said container (2) and/or exiting said container (2) on the basis of signals provided by said olfactory sensor means (9).

10. Apparatus according to any one of the preceding claims, wherein said flow generating means comprises at least one heater (6) of the process gas entering said container (2) and wherein said control means is configured to receive data related to the incoherent plastics to be processed and to control said at least one heater (6) on the basis of said data received and/or on the basis of signals provided by said olfactory sensor means (9).

11. Apparatus according to any one of the preceding claims, wherein said control means is configured to control at least one parameter indicating the humidity content of the incoherent plastics on the basis of signals provided by said olfactory sensor means (9).

12. Apparatus according to any one of the preceding claims, comprising recirculation means (11) configured to recirculate at least a part of the incoherent plastics from an outlet (12) to an inlet (13) of said container, said control means being configured to control said recirculation means (11) on the basis of signals provided by said olfactory sensor means (9).

13. Apparatus according to any one of the preceding claims, comprising stirring means (14) configured to stir the incoherent plastics in said container (2), and wherein said control means is configured to control said stirring means (14) on the basis of signals provided by said olfactory sensor means (9).

14. Treatment method comprising the steps of generating a flow of process gas through incoherent plastics, detecting by olfactory sensor means (9) the content of an aldehyde, in particular acetaldehyde, of the process gas that has passed through said incoherent plastics, and controlling at least one operating parameter of said treatment method on the basis of said detected content.

15. Method according to claim 14, wherein said at least one operating parameter comprises at least one parameter selected from the group including: a parameter indicating the humidity content of the process gas, a temperature of the process gas, a flow rate of the process gas, a parameter indicating the humidity content of the incoherent plastics, a parameter indicating a stirring speed of the incoherent plastics, a parameter indicating a recirculation speed of the incoherent plastics.
